# FASCICULE DE BREVET EUROPEEN

(11) **EP 4 103 456 B1**
(45) Date de publication et mention de la délivrance du brevet: **24.01.2024**
(21) Numéro de dépôt: 21708268.4
(22) Date de dépôt: 25.01.2021
(51) Int. Cl.: B62D 35/02, B62D 21/00, B62D 67/00

(54) **ÉCRAN SOUS MOTEUR POUR VÉHICULE AUTOMOBILE**
UNTERMOTORSCHIRM FÜR EIN KRAFTFAHRZEUG
UNDER-ENGINE SCREEN FOR A MOTOR VEHICLE

(30) Priorité: 10.02.2020 FR 2001310
(43) Date de publication de la demande: 21.12.2022
(73) Titulaire: Stellantis Auto SAS, 78300 Poissy (FR)
(72) Inventeur: KAMAL, Mohamed, 78370 PLAISIR (FR); JEAN-LAURENT, Frederic, 75013 PARIS 13 (FR); HARAMBAT, Fabien, 91310 LINAS (FR); GALLAND, John, 78125 ORPHIN (FR); COTTIN, Jean Sebastien, 78120 SONCHAMP (FR); DUMAS, Christophe, 91150 ETAMPES (FR); LI VOLSI, Pietro, 75012 PARIS (FR)
(86) Numéro de dépôt international: PCT/FR2021/050128
(87) Numéro de publication internationale: WO 2021/160950

(56) Documents cités:
- EP-A1- 2 822 787
- EP-B1- 2 822 787
- FR-A- 1 160 973
- FR-A1- 2 482 548
- FR-A1- 2 547 262

## Description

La présente invention revendique la priorité de la demande française 2001310 déposée le 10 Février 2020 dont le contenu (texte, dessins et revendications) est ici incorporé par référence

Le contexte technique de la présente invention est celui des dispositifs impliqués dans les performances aérodynamiques des véhicules automobiles, et plus particulièrement des soubassements pour véhicules automobiles et des planchers latéraux configurés pour équiper en soubassement des véhicules automobiles. Plus particulièrement, l'invention a trait à un écran sous moteur pour véhicule automobile.

Dans l'état de la technique, on connaît des soubassements pour véhicules automobiles destinés à protéger un bas de caisse du véhicule automobile qu'ils équipent. De manière générale, les soubassements équipant les véhicules automobiles impactent l'écoulement d'air entre ledit véhicule automobile et le sol, en particulier l'uniformité directionnelle de cet écoulement et sa vitesse. Ces soubassements sont par ailleurs agencés sous le véhicule automobile de sorte à permettre une évacuation de chaleur issue du compartiment moteur du véhicule automobile et d'une ligne d'échappement du véhicule automobile.

Les soubassements pour véhicules automobiles connus ont une forme inférieure relativement plate. Cette forme inférieure relativement plate a vocation à rendre homogène l'écoulement d'air entre le véhicule automobile et le sol. Une homogénéité de l'écoulement d'air sous le véhicule automobile permet d'améliorer les propriétés aérodynamiques dudit véhicule automobile, par effet de sol, en sa réduisant traînée et sa portance. Les constructeurs automobiles tendent à exploiter au mieux l'effet de sol pour améliorer la stabilité du véhicule automobile, notamment vis-à-vis de la tenue de route du véhicule automobile en cas de freinage et de virage.

Le document EP2822787 décrit un écran sous moteur de véhicule automobile comportant un élément de carénage inférieur et des éléments de carénage latéraux. L'élément de carénage inférieur comporte une partie s'étendant en avant des roues avant du véhicule et une partie arrière s'étendant en arrière des-dites roues.

L'inconvénient de ces soubassements plats pour véhicules automobile est qu'ils ne permettent pas *in fine* d'avoir un écoulement homogène sous l'ensemble du véhicule automobile. En effet, lorsque l'air s'engouffre sous le véhicule automobile, il s'écoule entre l'écran sous moteur et le sol de façon relativement homogène à l'avant des roues avant dudit véhicule automobile. Puis, en passant entre les deux roues avant du véhicule automobile, les roues avant génèrent, par leur rotation en phase de roulage, un sillage qui perturbe l'écoulement d'air en le déviant de sa trajectoire initiale. L'écoulement d'air est alors orienté hors des planchers latéraux en soubassement du véhicule automobile, vers l'intérieur du soubassement. Ainsi, la forme extérieure relativement plate des soubassements pour véhicules automobiles connus crée une portance qui diminue la stabilité du véhicule automobile et réduit les effets bénéfiques attendus de l'écran sous-moteur sur l'aérodynamisme du véhicule automobile.

La présente invention a pour objet de proposer un nouvel écran sous moteur pour véhicule automobile afin de répondre au moins en grande partie aux problèmes précédents et de conduire en outre à d'autres avantages.

Un autre but de l'invention est de proposer un écran sous moteur pour véhicule automobile permettant d'améliorer la stabilité du véhicule automobile.

Un autre but de l'invention est de proposer un écran sous moteur pour véhicule automobile permettant d'améliorer les propriétés aérodynamiques du véhicule automobile.

Un autre but de l'invention est de proposer écran sous moteur pour véhicule automobile permettant d'évacuer une chaleur issue du compartiment moteur du véhicule automobile et d'une ligne d'échappement du véhicule automobile.

Un autre but de l'invention est de proposer un écran sous moteur pour véhicule automobile qui soit universel et configuré pour s'adapter à différents véhicules automobiles.

Selon un premier aspect de l'invention, on atteint au moins l'un des objectifs précités avec un écran sous moteur pour véhicule automobile, l'écran sous moteur comportant un élément de carénage inférieur délimité latéralement par des éléments de carénage latéraux, l'élément de carénage inférieur comportant une partie avant destinée à s'étendre en avant des roues avant du véhicule automobile, et une partie arrière destinée à être située au niveau des roues avant du véhicule automobile, caractérisé en ce que, au moins au niveau de sa partie avant, l'élément de carénage inférieur comporte un évent présentant un profil transverse en V entre ses deux éléments de carénage latéraux.

L'évent est situé au moins en partie avant de l'élément de carénage inférieur. Autrement dit, l'évent est destiné à être situé au moins en avant des roues avant du véhicule automobile. Plus l'évent est situé en avant, plus l'écran sous moteur est avantageux d'un point de vue aérodynamique pour infléchir l'écoulement d'air. L'évent peut se prolonger au niveau de la partie arrière de l'élément de carénage inférieur. Autrement dit, l'évent peut être destiné à être située entre les roues avant du véhicule automobile.

L'évent forme une partie de l'élément de carénage inférieur destinée à être exposée de front à un écoulement d'air. Dans le véhicule automobile équipé de l'écran sous moteur selon l'invention, l'évent forme une partie de l'élément de carénage inférieur destinée à être exposée à l'écoulement d'air circulant entre ledit véhicule automobile et le sol, depuis l'avant vers l'arrière dudit véhicule automobile.

L'évent présente un profil transverse en V entre les deux éléments de carénage latéraux de l'écran sous moteur conforme au premier aspect de l'invention. En d'autres termes, l'évent donne à l'écran sous moteur un profil en étrave. L'écran sous moteur est ainsi destiné à être saillant sous le véhicule automobile qu'il équipe.

Le profil transverse en V de l'évent est obtenu dans un plan perpendiculaire à un axe longitudinal de l'écran sous moteur. L'axe longitudinal de l'écran sous moteur s'étend entre la partie avant et la partie arrière de l'élément de carénage inférieur.

Le profil transverse en V de l'évent est destiné à pointer vers le sol dans le véhicule automobile équipé d'un écran sous moteur selon l'invention. Dans le véhicule automobile équipé d'un écran sous moteur selon l'invention, le profil transverse en V de l'évent réduit localement une distance entre l'écran sous moteur et le sol.

L'évent est destiné à contrer l'influence des roues avant du véhicule automobile en phase de roulage sur l'écoulement d'air. En effet, le profil transverse en V de l'évent permet de dévier l'écoulement d'air, sous le véhicule automobile, vers les éléments de carénage latéraux de l'écran sous moteur l'écoulement d'air. A *contratio,* les roues avant dévient l'écoulement d'air à l'opposé, autrement dit vers l'intérieur, entre les éléments de carénage latéraux de l'écran sous moteur. Le profil transverse en V de l'évent impose un infléchissement de l'écoulement d'air dévié par les roues avant.

L'invention conforme à son premier aspect est ainsi avantageusement destinée à maintenir un écoulement d'air laminaire sous le véhicule automobile en sortie de l'écran sous moteur.

L'écran sous moteur pour véhicule automobile conforme au premier aspect de l'invention comprend avantageusement au moins un des perfectionnements ci-dessous, les caractéristiques techniques formant ces perfectionnements pouvant être prises seules ou en combinaison :
- l'évent s'étend exclusivement au niveau de la partie avant de l'élément de carénage inférieur, c'est-à-dire au niveau de sa partie destinée à être située en avant des roues avant du véhicule automobile. Alors, la partie arrière de l'élément de carénage inférieur est dépourvue d'évent. Plus particulièrement, l'évent s'étend exclusivement en avant d'un essieu des roues avant du véhicule automobile ;
- l'évent comporte deux faces inclinées situées en regard l'une de l'autre et reliée au niveau d'une dorsale centrale formant un axe longitudinal de l'écran sous moteur, l'axe longitudinal étant situé dans une position médiane entre les éléments de carénage latéraux dudit écran sous moteur. L'axe longitudinal de l'écran sous moteur est celui précité. Chaque face inclinée de l'évent forme une pente dans le profil transversale en V de l'évent. La dorsale centrale de l'évent relie les deux faces inclinées entre elles et forment la pointe du profil transversal en V de l'évent. L'axe longitudinal de l'écran sous moteur s'étend entre la partie avant de l'élément de carénage inférieur et la partie arrière de l'élément de carénage inférieur. Chaque face inclinée de l'évent est destinée à opposer une résistance à un écoulement d'air orienté selon l'axe longitudinal et circulant d'avant en arrière. L'axe longitudinal situé dans une position médiane entre les éléments de carénage latéraux de l'écran sous moteur permet de maintenir un écoulement d'air laminaire équivalent sous le véhicule automobile de part et d'autre dudit axe longitudinal une fois passée la partie arrière de l'élément de carénage inférieur ;
- le profil transverse de l'évent est symétrique, relativement à un plan passant par la dorsale centrale et entre les éléments de carénage latéraux de l'écran sous moteur. Un tel profil transverse de l'évent est destiné à homogénéiser l'écoulement d'air sous le véhicule automobile, et ce de façon similaire de part et d'autre de l'axe longitudinal de l'écran sous moteur ;
- un angle d'inclinaison formé entre les deux faces inclinées formant l'évent est compris entre 179° et 173°. En d'autres termes, un angle d'inclinaison de chaque face inclinée est compris entre 1 ° et 7° relativement à une face plane de référence joignant les deux éléments de carénage latéraux. Pour une position longitudinale donnée, le profil transverse de l'évent est formé par deux segments concourants, chaque segment formant un profil de la face inclinée correspondante ;
- relativement à l'axe longitudinal de l'écran sous moteur, le profil transverse de l'évent est invariant. En d'autres termes, le profil transverse de l'évent demeure identique le long de l'axe longitudinal de l'écran sous moteur ;
- préférentiellement, relativement à l'axe longitudinal de l'écran sous moteur, le profil transverse de l'évent est variable. En d'autres termes, le profil transverse de l'évent est changeant selon sa position le long de l'axe longitudinal de l'écran sous moteur. Par exemple, le profil transverse de l'évent a un angle d'inclinaison variable, par exemple croissant et/ou décroissant. Par exemple encore, au moins une des faces inclines du profil transverse de l'évent est au moins en partie droit et/ou courbe ;
- selon une première variante alternative, en parcourant l'axe longitudinal de l'écran sous moteur depuis la partie avant de l'élément de carénage inférieur vers la partie arrière dudit élément de carénage inférieur, l'angle d'inclinaison décroît. L'angle d'inclinaison peut décroître de façon linéaire ou non linéaire. Selon une deuxième variante alternative à la première variante, en parcourant l'axe longitudinal de l'écran sous moteur depuis la partie avant de l'élément de carénage inférieur vers la partie arrière dudit élément de carénage inférieur, l'angle d'inclinaison croît. L'angle d'inclinaison peut croître de façon linéaire ou non linéaire ;
- relativement aux faces inclinées, une élévation de la dorsale centrale prise au niveau de la partie avant de l'élément de carénage inférieur est inférieure à l'élévation de la dorsale centrale prise au niveau de la partie arrière de l'élément de carénage inférieur. En d'autres termes, lorsque l'écran sous moteur est mis en oeuvre sur le véhicule automobile, la dorsale centrale est plus éloignée du sol au niveau de la partie avant de l'écran sous moteur que la dorsale centrale prise au niveau de sa partie arrière. Par exemple, le profil transversal en V augmente en dimensions en partie arrière de l'élément de carénage inférieur par rapport à la partie avant de l'élément de carénage inférieur ;
- l'écran sous moteur comporte un col formé par une surface plane qui s'étend latéralement entre les éléments de carénage latéraux, le col étant situé en arrière de l'évent. Le col de l'écran sous moteur est un point bas de l'élément sous moteur, relativement aux autres parties de l'écran sous moteur.
- le col est destiné à être situé en avant des roues avant du véhicule automobile. Le col de l'écran sous moteur, lorsqu'il est situé en avant des roues avant du véhicule automobile équipé d'un écran sous moteur selon l'invention, permet d'infléchir le sillage de l'écoulement d'air au préalable à ce que ce dernier n'arrive à hauteur desdites roues avant, de sorte à optimiser l'effet aérodynamique de l'invention. Le col de l'écran sous moteur, lorsqu'il est situé en avant des roues avant du véhicule automobile équipé d'un écran sous moteur selon l'invention, permet de stabiliser ledit véhicule automobile ;
- le col forme un col reculé dans l'élément de carénage inférieur. Notamment le col forme un col reculé en comparaison de la position longitudinale du col des écrans sous moteur connus. Un col reculé, par rapport à un col avancé, permet d'augmenter les vitesses d'écoulement d'air en soubassement et concours à réduire l'effet rentrant du sillage des roues avant. Ainsi, la portance arrière du véhicule automobile équipé d'un écran sous moteur selon l'invention est augmentée ;
- une élévation du col est supérieure à l'élévation de la dorsale centrale de l'évent prise au niveau de la partie arrière de l'élément de carénage inférieur. En d'autres termes, le col de l'écran sous moteur est plus près du sol que la dorsale centrale de l'évent prise au niveau de la partie arrière de l'élément de carénage inférieur. On comprend que le col s'étend en arrière et en saillie par rapport à l'évent ;
- relativement à l'axe longitudinal et/ou transversalement, une élévation du col est constante. En d'autres termes, le col est destiné à s'étendre de manière horizontale sous le véhicule automobile que l'écran sous moteur équipe ;
- selon un premier mode de réalisation préférentielle, le col et l'évent sont issus de matière. On entend par « issus de matière » le fait que, dans l'écran sous moteur conforme au premier aspect de l'invention, le col et l'évent ne peuvent être séparés les uns des autres sans qu'il ne soit porté atteinte à tout ou partie de leur intégrité. Ainsi, dans l'écran sous moteur selon l'invention, le col et l'évent forment un ensemble qualifié de monobloc du fait qu'ils ne forment ensemble qu'une seule et même pièce continue, faite d'un seul tenant et obtenue au cours d'un même procédé de fabrication. L'invention conforme à son premier aspect permet ainsi avantageusement d'obtenir un écran sous moteur préfabriqué, dont la fabrication est simplifiée puisqu'elle s'affranchi de l'assemblage du col et de l'évent ainsi que de la présence de moyens de fixation entre le col et l'évent. Selon un deuxième mode de réalisation alternatif au premier mode de réalisation, le col et l'évent sont rapportés et fixés solidairement l'un à l'autre. Avantageusement, le col et l'évent sont rapportés et fixés solidairement l'un à l'autre de manière non démontable. Par exemple le col et l'évent sont rapportés et fixés solidairement l'un à l'autre par soudage ;
- l'écran sous moteur est formé par un matériau métallique. Le matériau métallique comprend ainsi un métal ou un alliage métallique. A titre d'exemple non limitatif, le matériau métallique formant l'écran sous moteur est constitué d'un alliage d'acier ou d'aluminium.

Selon un deuxième aspect de l'invention, il est proposé un véhicule automobile comportant un châssis supportant un essieu avant situé en arrière d'un pare-chocs avant du véhicule automobile, et un essieu arrière situé en arrière de l'essieu avant, le véhicule automobile comportant un écran sous moteur conforme au premier aspect de l'invention ou à l'un quelconque de ses perfectionnements, l'écran sous moteur étant situé en arrière du pare-chocs avant et s'étendant longitudinalement en direction de l'essieu arrière.

Dans le véhicule automobile conforme au deuxième aspect de l'invention, l'essieu avant relie l'une à l'autre les roues avant du véhicule automobile. L'élément de carénage inférieur de l'écran sous moteur comporte une partie avant qui s'étend en avant des roues avant du véhicule automobile, c'est-à-dire en avant de l'essieu avant, et une partie arrière située au niveau des roues avant du véhicule automobile. La partie arrière de l'élément de carénage inférieur de l'écran sous moteur est situé au niveau de l'essieu avant.

Dans le véhicule automobile conforme au deuxième aspect de l'invention, l'évent est situé au moins en avant des roues avant du véhicule automobile, c'est-à-dire au moins en avant de l'essieu avant. L'évent peut se prolonger entre les roues avant du véhicule automobile.

Dans le véhicule automobile conforme au deuxième aspect de l'invention, l'évent forme une partie de l'élément de carénage inférieur exposée à l'écoulement d'air circulant entre ledit véhicule automobile et le sol, depuis l'avant vers l'arrière dudit véhicule automobile. L'écoulement d'air circule sous le véhicule automobile depuis le pare-chocs avant dudit véhicule automobile.

Dans le véhicule automobile conforme au deuxième aspect de l'invention, l'écran sous moteur est saillant sous ledit véhicule automobile.

Le véhicule automobile conforme au deuxième aspect de l'invention comprend avantageusement au moins un des perfectionnements ci-dessous, les caractéristiques techniques formant ces perfectionnements pouvant être prises seules ou en combinaison :
- le col de l'écran sous moteur est situé en arrière de l'essieu avant du véhicule automobile. Dans le véhicule automobile conforme au deuxième aspect de l'invention, le col de l'écran sous moteur est formé par une surface plane qui s'étend latéralement entre les éléments de carénage latéraux, le col étant situé en arrière de l'évent ;
- lorsque le col de l'écran sous moteur est situé en arrière de l'essieu avant du véhicule automobile, l'élévation du col est supérieure à l'élévation de la dorsale centrale de l'évent prise au niveau de la partie arrière de l'élément de carénage inférieur.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique du véhicule automobile conforme au premier aspect de l'invention, vu du dessous ;
[Fig.2] illustre une vue schématique de l'écran sous moteur conforme au premier aspect de l'invention, vu de face ;
[Fig.3] illustre une vue schématique du véhicule automobile conforme au premier aspect de l'invention, vu de face ;
[Fig.4] illustre une vue schématique de l'écran sous moteur conforme au premier aspect de l'invention, vu du dessus ;
[Fig.5] illustre une vue schématique de l'écran sous moteur conforme au premier aspect de l'invention, vu latéralement ;
[Fig.6] illustre une vue schématique partielle du véhicule automobile conforme au premier aspect de l'invention, vu du dessous ;
[Fig.7] illustre une vue schématique partielle du véhicule automobile conforme au premier aspect de l'invention, vu latéralement ;
[Fig.8] illustre un écoulement d'air sous le véhicule automobile conforme au deuxième aspect de l'invention, illustré en FIGURE 1.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

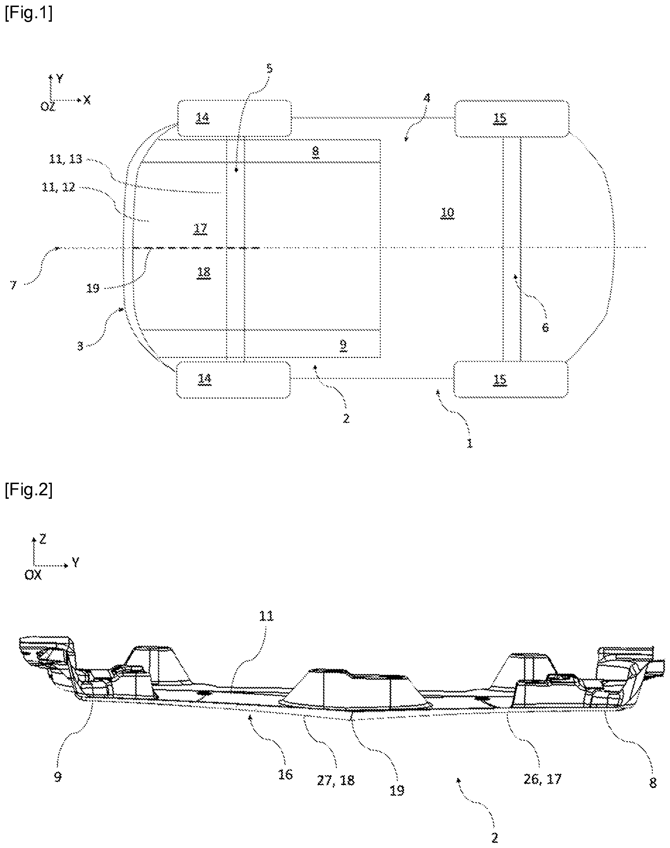

Dans les FIGURES 1 à 8, les orientations et directions sont définies comme suivant. La direction longitudinale, correspondant à une direction d'avant en arrière, sera représentée par un axe OX. La direction latérale sera représentée par un axe OY. La direction verticale, qui référence la direction d'une élévation telle que définie dans l'invention, sera représentée par un axe OZ. Ces différents axes définissent un repère orthonormé OXYZ représenté dans les différentes figures. Dans de repère orthonormé, l'orientation « avant » sera définie par le sens positif de l'axe OX, l'orientation « arrière » étant définie par le sens négatif de ce même axe. L'orientation « dessus » ou « supérieur » sera définie par le sens positif de l'axe OZ, l'orientation « dessous » ou « inférieure » étant définie par le sens négatif de ce même axe.

La FIGURE 1 illustre un véhicule automobile 1 conforme au premier aspect de l'invention, vu du dessous. Le véhicule automobile 1 comporte un écran sous moteur 2 conforme au premier aspect de l'invention, un pare-chocs avant 3, et un châssis 4 supportant un essieu avant 5 du véhicule automobile 1 et un essieu arrière 6 du véhicule automobile 1. L'essieu avant 5 du véhicule automobile 1 est situé en arrière du pare-chocs avant 3 du véhicule automobile 1 et en avant de l'essieu arrière 6 du véhicule automobile 1. L'essieu avant 5 du véhicule automobile 1 est fixé solidairement à des roues avant 14 du véhicule automobile 1. L'essieu arrière 6 du véhicule automobile 1 est fixé solidairement à des roues arrière 15 du véhicule automobile 1.

L'écran sous moteur 2 conforme au premier aspect de l'invention est situé en arrière du pare-chocs avant 3 du véhicule automobile 1. L'écran sous moteur 2 s'étend selon un axe longitudinal 7 orienté selon l'axe OX. L'axe longitudinal 7 de l'écran sous moteur 2 est situé dans une position médiane entre des éléments de carénage latéraux 8, 9 dudit écran sous moteur 2.

L'écran sous moteur 2 s'étend longitudinalement depuis le pare-chocs avant 3 du véhicule automobile 1 vers l'essieu avant 5 dudit véhicule automobile 1 et également au-delà dudit essieu avant 5 en direction de l'essieu arrière 6, selon l'axe longitudinal 7 de l'écran sous moteur 2. L'écran sous moteur 2 couvre un compartiment moteur avant, ici non représenté, et se limite ainsi à l'avant du véhicule automobile. L'arrière du véhicule automobile 1, et en particulier un soubassement arrière 10 du véhicule automobile 1, est dépourvu d'écran sous moteur 2 selon l'invention.

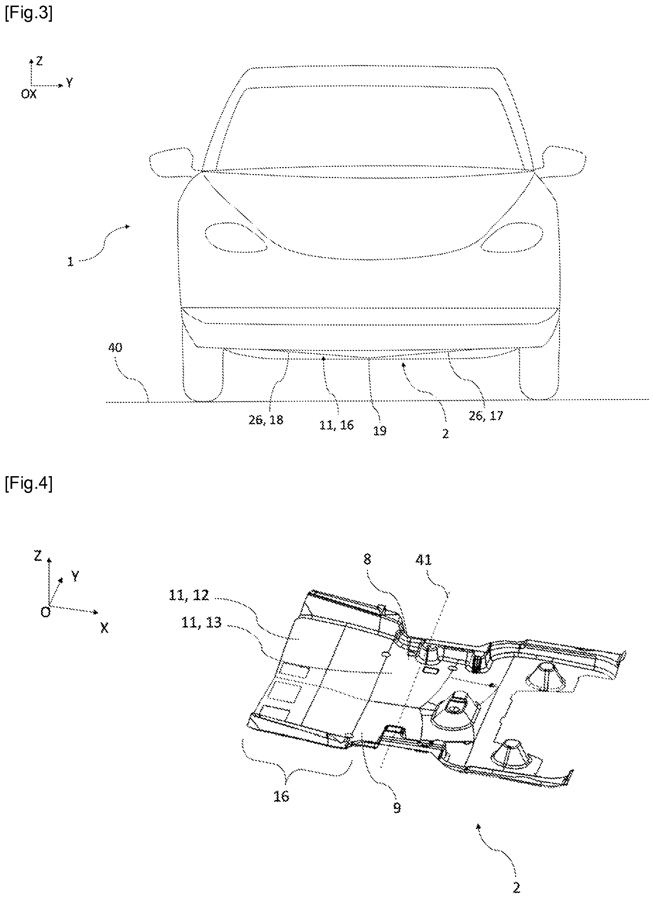

Les FIGURES 2, 4 et 5 illustrent de façon isolée l'écran sous moteur 2 conforme au premier aspect de l'invention, respectivement par une vue de face selon l'axe OX, par une vue du dessus selon l'axe OZ et par vue latérale selon l'axe OY. Ces différents angles de vues permettent d'apprécier la forme caractéristique de l'écran sous moteur 2 conforme au premier aspect de l'invention. Les FIGURES 3, 6 et 7 montrent l'écran sous moteur 2 équipant le véhicule automobile 1 conforme au deuxième aspect de l'invention, respectivement par une vue de face selon l'axe OX, par une vue du dessous selon l'axe OZ et par une vue latérale selon l'axe OY. Ces différents angles de vues permettent d'apprécier la forme caractéristique de l'écran sous moteur 2 conforme au premier aspect de l'invention par rapport au véhicule automobile 1.

Les FIGURES 1, 2, 4, 6 montrent que l'écran sous moteur 2 comporte un élément de carénage inférieur 11 délimité latéralement par les éléments de carénage latéraux 8, 9. Les éléments de carénage latéraux 8, 9 et l'élément de carénage inférieur 11 s'étendent tous deux depuis le pare-chocs avant 3 du véhicule automobile 1 et en direction de l'essieu arrière 6 du véhicule automobile 1. Les FIGURES 1, 4, 6 montrent que l'élément de carénage inférieur 11 comporte une partie avant 12 et une partie arrière 13. La partie avant 12 de l'élément de carénage inférieur 11 de l'écran sous moteur 2 est définie comme étant la partie de l'élément de carénage inférieur 11 qui destinée à être s'étendre en avant des roues avant 14 du véhicule automobile 1. La partie arrière 13 de l'élément de carénage inférieur 11 de l'écran sous moteur 2 est définie comme étant la partie de l'élément de carénage inférieur 11 qui est destinée à être située au niveau des roues avant 14 du véhicule automobile 1. En l'espèce, la partie arrière 13 de l'élément de carénage inférieur 11 de l'écran sous moteur 2 destinée à être s'étendre au-delà des roues avant 14 du véhicule automobile 1, en direction de l'essieu arrière 6.

La FIGURE 2 montre que l'élément de carénage inférieur 11 comporte un évent 16 présentant un profil transverse 26, 27 en V entre ses deux éléments de carénage latéraux 8, 9. La FIGURE 3 illustre l'évent 16 de la FIGURE 2 vu depuis l'avant du véhicule automobile 1 conforme au deuxième aspect de l'invention. L'évent 16 de l'élément de carénage inférieur 11 forme une saillie sous le véhicule automobile 1, du fait de son profil transverse 26, 27 en V qui pointe vers le sol 40. Ainsi, l'évent 16 de l'élément de carénage inférieur 11 est une partie de l'élément de carénage inférieur 11 qui est rapprochée du sol 40 par rapport aux autres parties dudit écran sous moteur 2.

En référence aux FIGURES 1, 2 et 3, l'évent 16 de l'élément de carénage inférieur 11 comporte deux faces inclinées 17, 18 situées en regard l'une de l'autre. Les deux faces inclinées 17, 18 de l'évent 16 de l'élément de carénage inférieur 11 sont reliées l'une à l'autre au niveau d'une dorsale centrale 19 dudit évent 16.

La dorsale centrale 19 de l'évent 16 forme l'axe longitudinal 7 de l'écran sous moteur 2 comme visible en FIGURE 1. En l'espèce, les deux faces inclinées 17, 18 sont symétriques par rapport à un plan d'orientation OZ passant par la dorsale centrale 19 de l'évent 16 de l'élément de carénage inférieur 11.

La FIGURE 4 montre que l'évent 16 de l'élément de carénage inférieur 11 est présent au moins au niveau de la partie avant 12 de l'élément de carénage inférieur 11 de l'écran sous moteur 2. En l'espèce, l'évent 16 de l'élément de carénage inférieur 11 est présent en partie avant 12 de l'élément de carénage inférieur 11 de l'écran sous moteur 2 et s'étend au-delà de ladite partie avant 12, c'est-à-dire au niveau de la partie arrière 13 de l'élément de carénage inférieur 11 de l'écran sous moteur 2. Dans la FIGURE 4, la position de l'essieu avant 5 est schématisée par un trait pointillé 41.

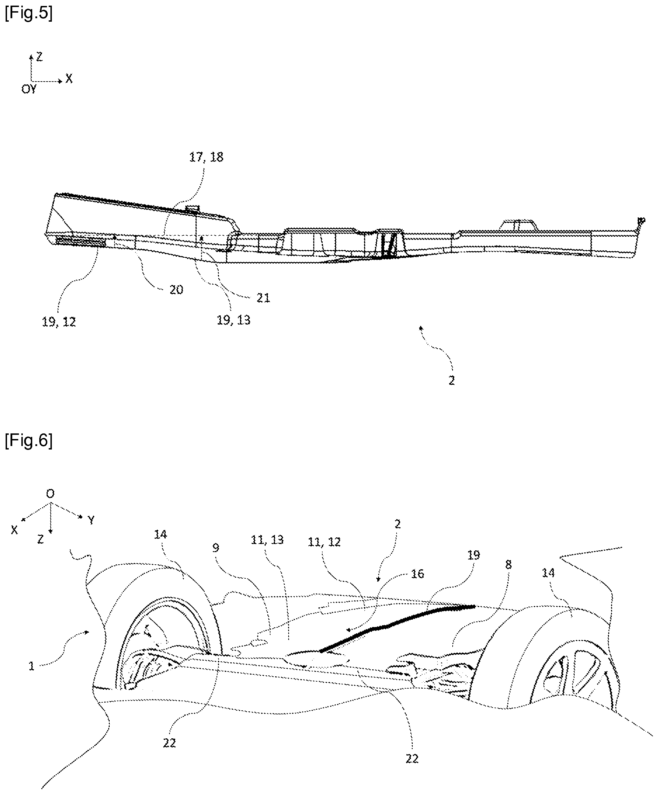

La FIGURE 5 illustre différentes élévations de l'écran sous moteur 2, orientées selon l'axe OZ. Chaque élévation est une distance mesurée relativement aux faces inclinées 17, 18. Une élévation de la dorsale centrale 19 prise au niveau de la partie avant 12 de l'élément de carénage inférieur 11 est représentée par une première flèche 20 et l'élévation de la dorsale centrale 19 prise au niveau de la partie arrière 13 de l'élément de carénage inférieur 11 est représenté par une deuxième flèche 21. L'élévation de la dorsale centrale 19 prise au niveau de la partie avant 12 de l'élément de carénage inférieur 11 est inférieure à l'élévation de la dorsale centrale 19 prise au niveau de la partie arrière 13 de l'élément de carénage inférieur 11.

La FIGURE 6 montre que l'écran sous moteur 2 comporte un col 22 formé par une surface plane qui s'étend latéralement entre les éléments de carénage latéraux 8, 9. Le col 22 de l'écran sous moteur 2 est situé en arrière de l'évent 16 de l'élément de carénage inférieur 11, et notamment en arrière de la dorsale centrale 19.

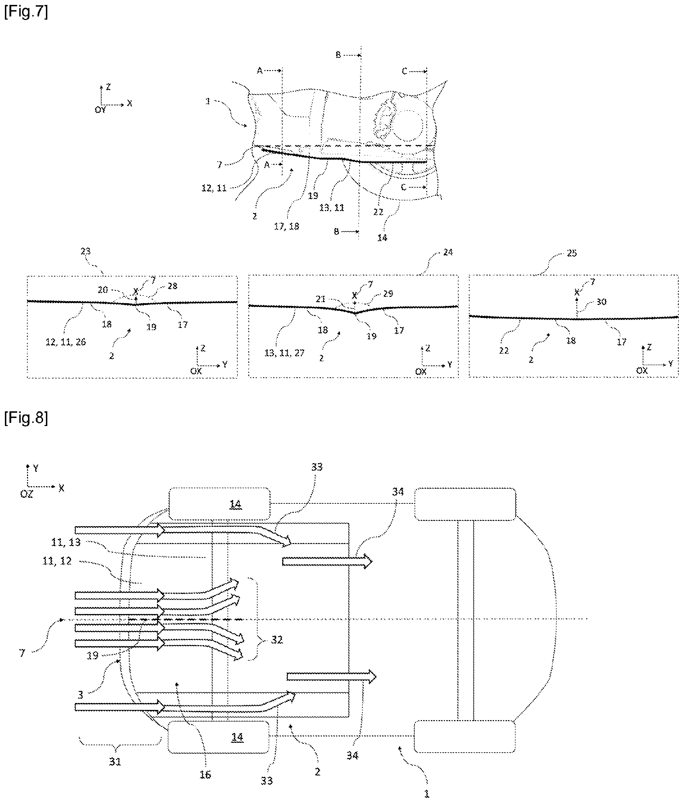

La FIGURE 7 illustre une vue de latérale de l'avant du véhicule automobile 1. Une des roues avant 14 du véhicule automobile 1, correspondant à la roue avant 14 située entre le lecteur et l'évent 16 de l'élément de carénage inférieur 11, est masquée pour rendre plus lisible la FIGURE 7, et notamment pour visualiser l'écran sous moteur 2. L'écran sous moteur 2 forme une pente globalement décroissante orientée d'avant en arrière du véhicule automobile, au niveau de la dorsale centrale 19 de l'évent 16 de l'élément de carénage inférieur 11. Cette configuration à l'avantage de présenter progressivement une surface de résistance -les faces inclinées 17, 18- à un écoulement d'air entrant sous le véhicule automobile 1.

La FIGURE 7 illustre, dans trois encarts dédiés 23, 24, 25, une succession de coupes latérales visibles sur la vue de latérale de l'avant du véhicule automobile 1. Une coupe latérale AA, située au niveau de la partie avant 12 de l'élément de carénage inférieur 11 de l'écran sous moteur 2, présente un premier profil transverse en V 26 représenté dans un premier encart 23. Une coupe latérale BB, située au niveau de la partie arrière 13 de l'élément de carénage inférieur 11 de l'écran sous moteur 2, présente un deuxième profil transverse en V 27 représenté dans un deuxième encart 24. Une coupe latérale CC est par ailleurs située au niveau du col 22 de l'écran sous moteur 2 est représentée dans un troisième encart 25.

Le premier encart 23 de la FIGURE 7 et le deuxième encart 24 de la FIGURE 7 montrent que les deux faces inclinées 17, 18 formant l'évent 16 de l'élément de carénage inférieur 11 sont symétriques par rapport à un plan d'orientation OX passant par l'axe longitudinal 7 de l'écran sous moteur 2. Le premier encart 23 de la FIGURE 7 et le deuxième encart 24 de la FIGURE 7 montrent que, dans le premier profil transverse en V 26 et dans le deuxième profil transverse en V 27, chaque face inclinée 17, 18 est courbée. En l'espèce, chaque face inclinée 17, 18 s'étend selon une ligne directrice courbe, non représentée, destiné à entrer en résistance avec un écoulement d'air de sorte à éloigner cet écoulement d'air de la dorsale centrale 19, tel que présenté en FIGURE 8.

Le premier encart 23 de la FIGURE 7 et le deuxième encart 24 de la FIGURE 7 montrent en particulier montre qu'un angle d'inclinaison 28, 29 est formé entre les deux faces inclinées 17, 18 formants l'évent 16 de l'élément de carénage inférieur 11. Cet angle d'inclinaison 28, 29 est variable selon le profil transverse 26, 27 en V considéré. Au niveau de la partie avant 12 de l'élément de carénage inférieur de l'écran sous moteur 2, un premier angle d'inclinaison 28 est plus grand qu'un deuxième angle d'inclinaison 29 pris au niveau de la partie arrière 13 de l'élément de carénage inférieur de l'écran sous moteur 2. Le col 22 de l'écran sous moteur 2 forme une surface plane comme illustré dans le troisième encart 25 de la FIGURE 7.

Relativement aux faces inclinées 17, 18, la FIGURE 7 permet de comparer différentes élévations. A titre de repère, l'axe longitudinal 7 de l'écran sous moteur 2 est représenté. Une élévation du col 22, représentée par une troisième flèche 30, est supérieure à l'élévation de la dorsale centrale 19 de l'évent 16 de l'élément de carénage inférieur 11 prise au niveau de la partie arrière 13 de l'élément de carénage inférieur 11, représenté par la deuxième flèche 21. Par ailleurs, l'élévation de la dorsale centrale 19 de l'évent 16 de l'élément de carénage inférieur 11 prise au niveau de la partie arrière 13 de l'élément de carénage inférieur 11, représenté par la deuxième flèche 21, est supérieure à l'élévation de la dorsale centrale 19 de l'évent 16 de l'élément de carénage inférieur 11 prise au niveau de la partie avant 12 de l'élément de carénage inférieur 11, représenté par la première flèche 20.

La FIGURE 8 illustre l'invention mis en oeuvre et schématise l'aérodynamisme en soubassement du véhicule automobile 1. La FIGURE 8 illustre l'orientation prise par un écoulement d'air, représenté par des séries de flèches 31, 32, 33, circulant d'avant en arrière sous ledit véhicule automobile 1.

L'écoulement d'air entre sous le véhicule automobile 1 au niveau du pare-chocs avant 3 sous forme laminaire, représenté par une première série de flèches 31.

L'écoulement d'air est progressivement dévié de sa trajectoire initiale par l'évent 16 de l'élément de carénage inférieur 11. Autrement dit, en partie avant 12 de l'élément de carénage inférieur 11 de l'écran sous moteur 2, l'évent 16 de l'élément de carénage inférieur 11 offre une résistance à l'écoulement d'air qui éloigne ledit écoulement d'air de l'axe longitudinal 7 de l'écran sous moteur 2 et de la dorsale centrale 19 de l'évent 16. L'écoulement d'air dévié en partie avant 12 de l'élément de carénage inférieur 11 de l'écran sous moteur 2 est représenté par une deuxième série de flèches 32.

De façon concomitante, l'écoulement d'air est dévié en partie arrière 13 de l'élément de carénage inférieur 11 de l'écran sous moteur 2 par les roues avant 14 du véhicule automobile 1 en rotation, créant un tourbillon qui se rapproche de l'élément de carénage inférieur 11. L'écoulement d'air dévié en partie arrière 13 de l'élément de carénage inférieur 11 de l'écran sous moteur 2 est représenté par une troisième série de flèches 33 qui indique de façon simplifiée la direction globale empruntée par le tourbillon.

Ainsi, en sortie de l'élément de carénage inférieur 11, l'écoulement d'air est uniformisé, comme représenté par une quatrième série de flèches 34.

En synthèse, l'invention concerne un écran sous moteur 2 comportant un élément de carénage inférieur 11 délimité latéralement par des éléments de carénage latéraux 8, 9. L'élément de carénage inférieur 11 comporte une partie avant 12 destinée à s'étendre en avant des roues avant 14 du véhicule automobile 1, et une partie arrière 13 destinée à être située au niveau des roues avant 14 du véhicule automobile 1. Au moins au niveau de la partie avant 12 de l'élément de carénage inférieur 11, ledit élément de carénage inférieur 11 comporte un évent 16. Dans l'écran sous moteur 2 conforme au premier aspect de l'invention, l'évent 16 s'étend en saillie de la partie avant 12 de l'élément de carénage inférieur 11, selon un profil transverse 26, 27 en V et entre les deux éléments de carénage latéraux 8, 9 de l'écran sous moteur 2.

Bien sûr, l'invention n'est pas limitée aux exemples qui viennent d'être décrits et de nombreux aménagements peuvent être apportés à ces exemples sans sortir du portée des revendications.

## Revendications

1. Écran sous moteur (2) pour véhicule automobile (1), l'écran sous moteur (2) comportant un élément de carénage inférieur (11) délimité latéralement par des éléments de carénage latéraux (8, 9), l'élément de carénage inférieur (11) comportant une partie avant (12) destinée à s'étendre en avant des roues avant (14) du véhicule automobile (1), et une partie arrière (13) destinée à être située au niveau des roues avant (14) du véhicule automobile (1), **caractérisé en ce que**, au moins au niveau de sa partie avant (12), l'élément de carénage inférieur (11) comporte un évent (16) présentant un profil transverse (26, 27) en V entre ses deux éléments de carénage latéraux (8, 9).

2. Écran sous moteur (2) selon la revendication précédente, dans lequel l'évent (16) comporte deux faces inclinées (17, 18) situées en regard l'une de l'autre et reliée au niveau d'une dorsale centrale (19) formant un axe longitudinal (7) de l'écran sous moteur (2), l'axe longitudinal (7) étant situé dans une position médiane entre les éléments de carénage latéraux (8, 9) dudit écran sous moteur (2).

3. Écran sous moteur (2) selon la revendication précédente, dans lequel un angle d'inclinaison (28, 29) formé entre les deux faces inclinées (17, 18) formant l'évent (16) est compris entre 179° et 173°.

4. Écran sous moteur (2) selon l'une quelconque des revendications précédentes, dans lequel, relativement à l'axe longitudinal (7) de l'écran sous moteur (2), le profil transverse (26, 27) de l'évent (16) est variable.

5. Écran sous moteur (2) selon la revendication précédente, dans lequel, en parcourant l'axe longitudinal (7) de l'écran sous moteur (2) depuis la partie avant (12) de l'élément de carénage inférieur (11) vers la partie arrière (13) dudit élément de carénage inférieur (11), l'angle d'inclinaison (28, 29) décroît.

6. Écran sous moteur (2) selon la revendications 2 ou l'une des revendications de 3 à 5 prise en combinaison avec la revendication 2, dans lequel, relativement aux faces inclinées (17, 18), une élévation de la dorsale centrale (19) prise au niveau de la partie avant (12) de l'élément de carénage inférieur (11) est inférieure à l'élévation de la dorsale centrale (19) prise au niveau de la partie arrière (13) de l'élément de carénage inférieur (11).

7. Écran sous moteur (2) selon l'une quelconque des revendications précédentes, dans lequel l'écran sous moteur (2) comporte un col (22) formé par une surface plane qui s'étend latéralement entre les éléments de carénage latéraux (8, 9), le col (22) étant situé en arrière de l'évent (16).

8. Écran sous moteur (2) selon la revendication précédente prise en combinaison avec la revendication 2, dans lequel une élévation du col (22) est supérieure à l'élévation de la dorsale centrale (19) de l'évent (16) prise au niveau de la partie arrière (13) de l'élément de carénage inférieur (11).

9. Véhicule automobile (1) comportant un châssis (4) supportant un essieu avant (5) situé en arrière d'un pare-chocs avant (3) du véhicule automobile (1), et un essieu arrière (6) situé en arrière de l'essieu avant (5), le véhicule automobile (1) comportant un écran sous moteur (2) selon l'une quelconque des revendications, l'écran sous moteur (2) étant situé en arrière du pare-chocs avant (3) et s'étendant longitudinalement en direction de l'essieu arrière (6).

10. Véhicule automobile (1) selon la revendication précédente prise en combinaison avec l'écran sous moteur (2) selon la revendication 7 ou 8, dans lequel le col (22) de l'écran sous moteur (2) est situé en arrière de l'essieu avant (5) du véhicule automobile (1). 1

## Patentansprüche

1. Untermotor-Display (2) für ein Kraftfahrzeug (1), wobei der Untermotor-Display (2) ein unteres Verkleidungselement (11) aufweist, das seitlich durch seitliche Verkleidungselemente (8, 9) begrenzt ist, wobei das untere Verkleidungselement (11) einen vorderen Abschnitt (12) aufweist, der sich vor den Vorderrädern (14) des Kraftfahrzeugs erstreckt und einem Hinterteil (13), der an den Vorderrädern (14) des Kraftfahrzeugs (1) angeordnet werden soll, **dadurch gekennzeichnet, dass** das untere Verkleidungselement (11) zumindest an seinem Vorderteil (12) eine Entlüftung (16) mit einem V-förmigen Querprofil (26, 27) zwischen seinen beiden Seitenverkleidungselementen (8) aufweist 9.

2. Motorisierter Schirm (2) nach dem vorhergehenden Anspruch, bei dem die Entlüftung (16) zwei geneigte Flächen (17, 18) aufweist, die einander gegenüberliegen und an einem zentralen Rücken (19) angebracht sind, der eine Längsachse (7) der Motorabschirmung (2) bildet, wobei die Längsachse (7) in einer Mittelposition zwischen den Elementen angeordnet ist Seitenverkleidung (8, 9) des Motorschirms (2).

3. Motorischer Schirm (2) nach dem vorhergehenden Anspruch, bei dem ein Neigungswinkel (28, 29), der zwischen den beiden geneigten Flächen (17, 18), die den Auslass (16) bilden, gebildet ist, zwischen 179° und 173° liegt.

4. Motorischer Schirm (2) nach einem der vorhergehenden Ansprüche, wobei das Querprofil (26, 27) des Entlüftungselements (16) relativ zur Längsachse (7) des Motorschirms (2) variabel ist.

5. Motorischer Schirm (2) nach dem vorhergehenden Anspruch, bei dem, wenn die Längsachse (7) des Motorschirms (2) von dem vorderen Abschnitt (12) des unteren Verkleidungselements (11) zum hinteren Abschnitt (13) des unteren Verkleidungselements (11) durchläuft, der Neigungswinkel (28, 29) abnimmt Es ist eine Frage der Zeit.

6. Motorisierter Schirm (2) nach Anspruch 2 oder einem der Ansprüche 3 bis 5 in Kombination mit Anspruch 2, wobei eine Erhöhung des zentralen Rückens (19) in Bezug auf die geneigten Flächen (17, 18) an dem vorderen Abschnitt (12) des unteren Verkleidungselements (11) geringer ist als die Erhöhung Mittelrücken (19), der am hinteren Teil (13) des unteren Verkleidungselements (11) angreift.

7. Motorischer Schirm (2) nach einem der vorhergehenden Ansprüche, wobei der Motorschirm (2) einen Hals (22) aufweist, der durch eine ebene Oberfläche gebildet ist, die sich seitlich zwischen den seitlichen Verkleidungselementen (8, 9) erstreckt, wobei der Hals (22) hinter der Entlüftung (16) angeordnet ist.

8. Motorisierter Schirm (2) nach dem vorhergehenden Anspruch in Kombination mit Anspruch 2, bei dem eine Erhöhung des Halses (22) größer ist als die Erhöhung des mittleren Rückens (19) des Entlüfters (16), der an dem hinteren Teil (13) des unteren Verkleidungselements (11) angreift.

9. Kraftfahrzeug (1) mit einem Rahmen (4), der eine Vorderachse (5) trägt, die hinter einer Vorderstoßstange (3) des Kraftfahrzeugs (1) angeordnet ist, und einer Hinterachse (6), die hinter der Vorderachse (5) angeordnet ist, wobei das Kraftfahrzeug (1) einen Motorschirm (2) nach einem der Ansprüche aufweist, wobei der Motorschirm (2) hinter der Schutzscheibe angeordnet ist Vorderstoßeinrichtung (3), die sich in Längsrichtung zur Hinterachse (6) erstreckt.

10. Kraftfahrzeug (1) nach dem vorhergehenden Anspruch in Kombination mit dem Motorschirm (2) nach Anspruch 7 oder 8, wobei der Hals (22) des Motorschirms (2) hinter der Vorderachse (5) des Kraftfahrzeugs (1) angeordnet ist.

## Claims

1. Motor vehicle (2) monitor (1) means a motor vehicle monitor (2) with a lower shroud element (11) delimited laterally by lateral shroud elements (8, 9), the lower shroud element (11) with a front part (12) intended to extend forward from the front wheels (14) of the vehicle motor vehicle (1), and a rear part (13) intended to be located at the front wheels (14) of the motor vehicle (1), characterized that, at least at the front part (12), the lower shroud element (11) has a vent (16) having a transverse profile (26, 27) in V between its two shrouding elements (8, 9).

2. Engine screen (2) according to the previous claim, in which the vent (16) has two inclined faces (17, 18) facing each other and connected to the level of a central dorsal (19) forming a longitudinal axis (7) of the engine screen (2), the longitudinal axis (7) being located in a mid-position ane between the side shroud elements (8, 9) of the said engine screen (2).

3. Engine screen (2) according to the previous claim, in which an angle of inclination (28, 29) formed between the two inclined faces (17, 18) forming the vent (16) is between 179° and 173°.

4. Engine screen (2) according to any of the preceding claims, in which, in respect of the longitudinal axis (7) of the engine screen (2), the transverse profile (26, 27) of the vent (16) is variable.

5. Engine screen (2) according to the previous claim, in which, by traveling the longitudinal axis (7) of the engine screen (2) from the front part (12) of the lower shroud element (11) to the rear part (13) of the said lower shroud element (11), the angle of inclination (28, 22 9) decreases.

6. Engine screen (2) according to claim 2 or one of the claims from 3 to 5 taken in conjunction with claim 2, in which, in respect of inclined faces (17, 18), a rise in the central dorsal (19) taken at the front (12) of the lower shroud element (11) is less than the elevation central dorsal (19) elevation taken at the rear (13) of the lower shroud element (11).

7. Engine screen (2) according to any of the preceding claims, in which the engine screen (2) has a collar (22) formed by a flat surface that extends laterally between the lateral shroud elements (8, 9), the collar (22) being located behind the vent (16).

8. Engine screen (2) according to the previous claim taken in conjunction with Claim 2, in which a rise of the collar (22) is greater than the elevation of the central dorsal (19) of the vent (16) taken at the rear (13) of the lower shroud element (11).

9. Motor vehicle (1) having a chassis (4) supporting a front axle (5) located behind a front bumper (3) of the motor vehicle (1), and a rear axle (6) located behind the front axle (5), the motor vehicle (1) having a motor screen (2) according to any of the claims, the engine screen (2) being located behind the front bumper (3) and extending lengthwise towards the rear axle (6).

10. Motor vehicle (1) according to the previous claim taken in combination with the engine screen (2) according to claim 7 or 8, in which the collar (22) of the motor screen (2) is located behind the front axle (5) of the motor vehicle (1).
